# EUROPÄISCHE PATENTSCHRIFT

(11) **EP 1 719 571 B1**
(45) Veröffentlichungstag und Bekanntmachung des Hinweises auf die Patenterteilung: **10.12.2008**
(21) Anmeldenummer: 06008639.4
(22) Anmeldetag: 26.04.2006
(51) Int. Cl.: B23K 11/34, B23K 11/30, B23K 37/04

(54) **Verfahren und Vorrichtung zum elektrischen Pressschweissen von mehrteiligen Werkstücken**
Method and device of resistance pressure welding of workpieces made of multiple parts
Méthode et dispositif de soudage par résistance sous pression de pièces faites de plusieurs éléments

(30) Priorität: 04.05.2005 DE 202005007360 U
(43) Veröffentlichungstag der Anmeldung: 08.11.2006
(73) Patentinhaber: Conntronic, 86465 Welden (DE)
(72) Erfinder: Reverchon, Günther, 82335 Berg (DE); Achatz, Steffen, 86420 Diedorf (DE)
(74) Vertreter: Ernicke, Hans-Dieter

(56) Entgegenhaltungen:
- US-A- 1 350 828
- US-A1- 2002 190 034
- PATENT ABSTRACTS OF JAPAN Bd. 2003, Nr. 12, 5. Dezember 2003 (2003-12-05) & JP 2003 311425 A (DAISHINKU CORP), 5. November 2003 (2003-11-05)

## Beschreibung

Die Erfindung betrifft ein Verfahren und eine Vorrichtung zum elektrischen Pressschweißen und zum Zuführen von mehrteiligen Werkstücken mit den Merkmalen im Oberbegriff des Verfahrens- und Vorrichtungshauptanspruchs.

Aus der US 1,350,828 A ist es bekannt, beim elektrischen Widerstandspressschweißen schalenförmige blecherne Hälften eines hohlen Projektils in entsprechend kontourierte Aufnahmen an einer stationären Elektrode und einer demgegenüber beweglichen Elektrode einer Schweißmaschine einzulegen. Die Elektroden sind Bestandteil der Schweißmaschine und sind mit einer Schweißstromquelle verbunden. Zum Schweißen wird kurzzeitig ein starker Schweißstrom mit einer hohen Stromdichte angelegt. Die Zuführung der einzelnen Werkstückteile in die Schweißmaschine und die Entnahme der geschweißten Fertigteile erfolgen manuell. Das Werkstückhandling dauert dabei länger als der eigentliche kurzzeitige Schweißprozess.

Eine ähnliche Zuführtechnik ist auch beim elektrischen Impulsschweißen, insbesondere beim Kondensator-Entladungsschweißen, bekannt. Bei diesen Verfahren ist die Schweißzeit besonders kurz.

Es ist Aufgabe der vorliegenden Erfindung, ein besseres Verfahren nebst Vorrichtung zum Pressschweißen und zum Zuführen von Werkstücken aufzuzeigen.

Die Erfindung löst diese Aufgabe mit den Merkmalen im Verfahrens- und Vorrichtungshauptanspruch.
Der Einsatz eines transportablen Werkstückhalters, der außerhalb der Schweißmaschine mit den Werkstückteilen bestückt werden kann, beschleunigt die Gesamtdauer des Schweißprozesses erheblich und führt zu einer deutlichen Leistungssteigerung. Der Werkstückhalter überträgt mit seinem elektrisch leitenden Werkzeugschalen den von den Elektroden zugeführten Strom und wird hierdurch zu einem mobilen Bestandteil der Schweißmaschine. Der Werkstückhalter kann mehrfach vorhanden sein, so dass die Bestückung und Entleerung von Werkstückhaltern sowie der eigentliche Schweißvorgang voneinander entkoppelt sind und einander zeitlich überlappen können. Die Bestückung und Entleerung des Werkstückhalters außerhalb der Schweißmaschine ist außerdem einfacher und komfortabler. Insbesondere steht hierfür mehr Platz und Bewegungsfreiheit zur Verfügung.

Die Handhabung des Werkstückhalters nebst Bestückung und Entladung kann manuell erfolgen. Der transportable und ggf. mehrfach vorhandene Werkstückhalter erlaubt aber auch eine maschinelle Handhabung und eine dementsprechende Leistungssteigerung. Durch eine Vollautomatisierung können Arbeitskosten eingespart werden.

Durch eine geeignete elektrische Isolierung kann bei einer maschinellen Handhabung der Werkstückhalter während des Schweißprozesses in der Schweißmaschine von der Handhabungseinrichtung festgehalten werden. Dies führt zu einer weiteren Beschleunigung und Vereinfachung der Handhabung. Ein An- und Abkuppeln des Werkstückträgers von der Handhabungseinrichtung ist entbehrlich.

Der Werkstückhalter kann mit einer integrierten oder zugeordneten Schließeinrichtung kombiniert werden, die ein Schließen der Werkzeugschalen nach der Bestückung bewirkt und die Werkzeugschalen während der weiteren Handhabung bis zur Entladung zusammenhält. Durch geeignete Führungen können die eingelegten Werkstückteile in ihrer schweißgerechten Lage zueinander positioniert und fixiert werden.

Die Werkzeugschalen können formschlüssige Aufnahmen für die Werkstückteile haben, welche einerseits für den notwendigen Halt und sie prozessgerechte Position der Werkstückteile und andererseits für den stromführenden Kontakt und die Kraftübertragung beim Zusammenpressen zwischen den Elektroden sorgen. Durch eine geeignete Formanpassung der Werkstückaufnahmen kann ein vollflächiger strom- und kraftleitender Kontakt zu den Werkstückteilen hergestellt werden. Die Einlegetiefe der Werkstückaufnahmen ist dabei so bemessen, dass in Schließstellung die Werkzeugschalen voneinander distanziert sind, so dass der Schweißstrom ausschließlich über die Kontaktbereiche der Werkstückteile fließt und für deren Verschweißung sorgt.

Das beanspruchte Verfahren und die Vorrichtung eignen sich besonders für das elektrische Impulsschweißen, insbesondere das Kondensator-Entladungsschweißen. Die wesentlich verkürzten Handhabungszeiten reduzieren die Gesamtzeit des Prozesses und erhöhen die Wirtschaftlichkeit, die Einsatzbereiche und auch die Verfügbarkeit dieser Schweißtechnik. Eine besondere Eignung besteht hierbei für schalenförmige Werkstückteile, die an ihrem offenen Schalenrändern passgenau in Kontakt gebracht und verschweißt werden können. Insbesondere ist es möglich, an den Schalenrändern eine umlaufende Schweißnaht und speziell auch eine Dichtschweißung herzustellen. Dies ist besonders im Behälterbau oder Leitungsbau von Vorteil.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Draufsicht auf eine Schweißzelle mit einer Schweißmaschine, mehreren Werkstückhaltern und einer Handhabungseinrichtung,
- Figur 2:: eine Draufsicht auf eine Variante der Schweißzelle von Figur 1 mit vier Robotern,
- Figur 3:: eine perspektivische Ansicht einer Schweißmaschine mit einem Roboter und einem Werkstückhalter in Zuführstellung,
- Figur 4 und 5:: verschiedene perspektivische Ansichten der Werkzeugschalen eines Werkstückhalters,
- Figur 6 und 7:: verschiedene perspektivische Ansichten des Werkstückhalters mit einer Schließeinrichtung

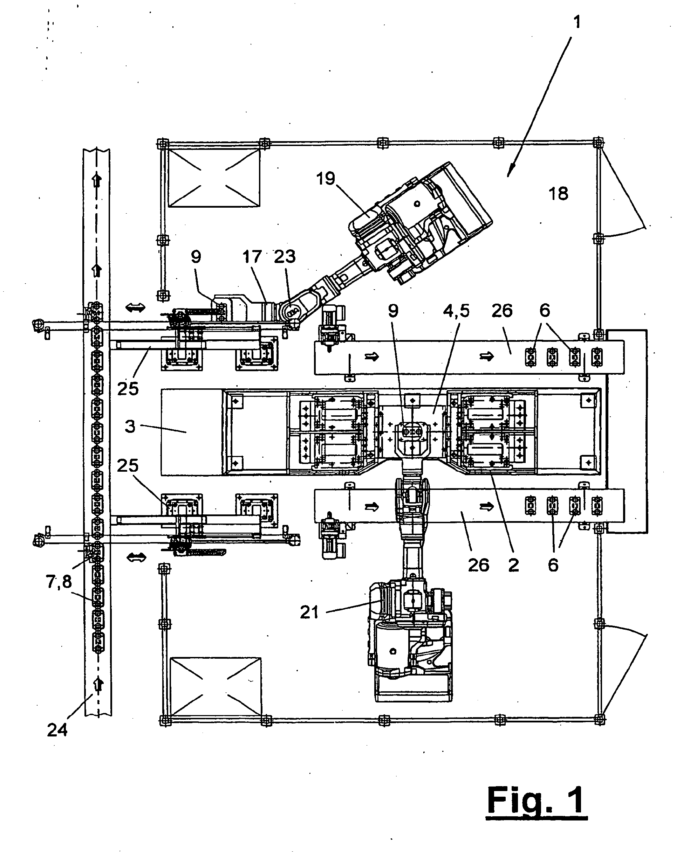

Figur 1 zeigt in der Draufsicht eine Vorrichtung zum elektrischen Pressschweißen von mehrteiligen Werkstücken (6), die in der gezeigten Ausführungsform als Schweißzelle ausgebildet ist. Die Schweißzelle kann alternativ Bestandteil einer größeren Schweißanlage sein. In der gezeigten Ausführungsform ist die Schweißzelle (1) voll automatisiert. Sie kann alternativ teilweise manuell betrieben werden.

In der Schweißzelle (1) ist mindestens eine elektrische Schweißmaschine (2) zur Ausführung des elektrischen Pressschweißprozesses angeordnet. Sie besitzt mindestens zwei unter Kraft zustellbare Elektroden (4,5), die in einem Gestell (3) mit einer Zustelleinrichtung (nicht dargestellt) gelagert sind. Die Schweißmaschine (2) umfasst ferner mindestens eine geeignete Schweißstromquelle sowie eine Prozesssteuerung (beide nicht dargestellt). Der Pressbereich an den Elektroden (4,5) ist von ein oder mehreren, vorzugsweise von zwei Seiten her zugänglich. In der gezeigten Ausführungsform werden die Elektroden vertikal aufeinander zubewegt und zusammen gepresst.

Der Pressschweißprozess kann unterschiedlich ausgebildet sein. Es handelt sich vorzugsweise um einen elektrischen Widerstands-Pressschweißprozess, insbesondere ein Impulsschweißverfahren. Besonders bevorzugt ist das elektrische Kondensator-Entladungsschweißverfahren, bei dem eine Kondensatoranordnung elektrisch aufgeladen wird und beim Entladevorgang über einen Schwingkreis einen Impulsstrom über die Elektroden (4,5) fließen lässt.

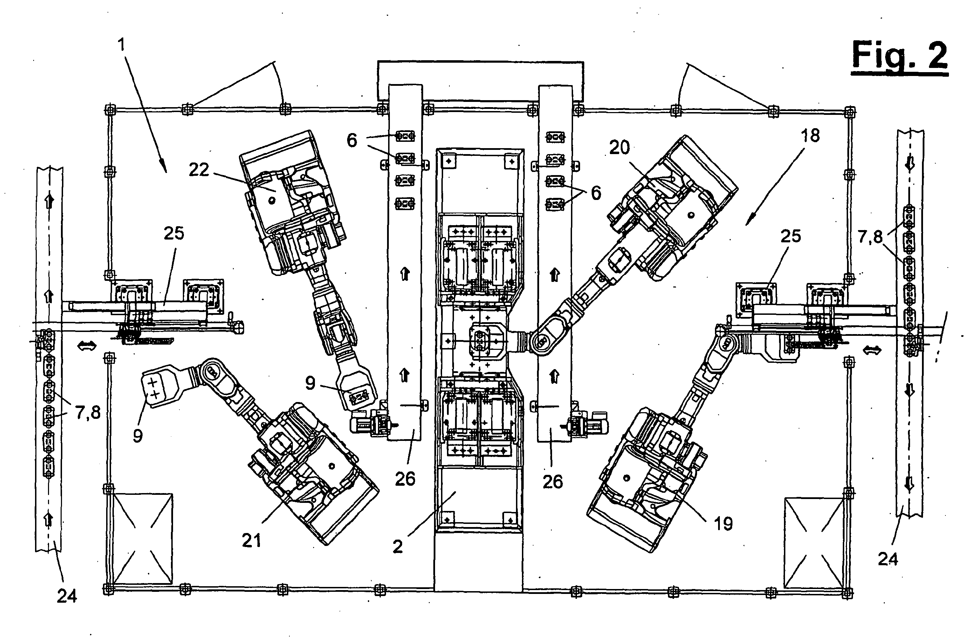

Die Schweißzelle (1) dient zum elektrischen Pressschweißen von ein oder mehreren Werkstücken (6), die in Figur 1 und 2 als Fertigteile dargestellt sind und die aus zwei oder mehr miteinander zu verschweißenden Werkstückteilen (7,8) bestehen. Für die Werkstückteile (7,8) oder das sogenannte Halbzeug sind je nach Zellenausgestaltung ein, zwei oder mehr Werkstückzuführungen (24) vorhanden. Die Fertigteile (6) können von zwei beidseits der Schweißmaschine (2) angeordneten Fertigteilabfuhren (26) abtransportiert werden.

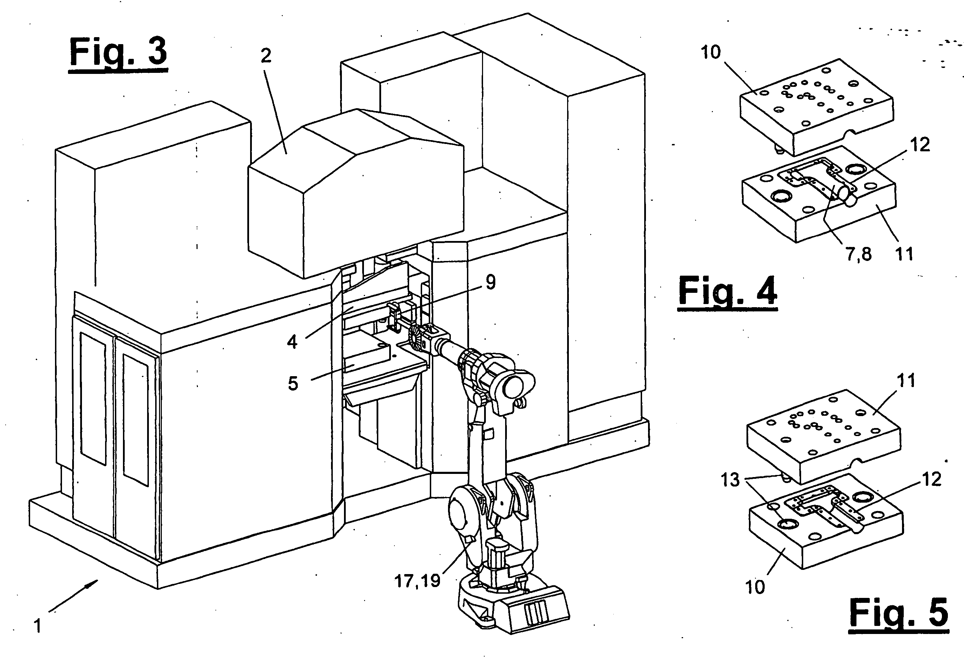

Die Werkstückteile (7,8) werden außerhalb der Schweißmaschine (2) in einem transportablen Werkstückhalter (9) eingelegt, der mindestens zwei relativ zueinander bewegliche und elektrische leitende Werkzeugschalen (10,11) aufweist. Figur 4 bis 7 zeigen diese Anordnung. Der Werkstückhalter (9) kann mittels einer Schließeinrichtung (14) eingeschlossen werden, wobei die Werkzeugschalen (10,11) aufeinander zubewegt werden und die Werkstückteile (7,8) zwischen sich halten. Der geschlossene Werkstückhalter (9) kann in die Schweißmaschine (2) eingeführt und zwischen die zurückgezogenen Elektroden (4,5) eingebracht werden. Anschließend werden die Elektroden (4,5) für den Schweißprozess gegeneinander zugestellt und an die Werkzeugschalen (10,11) angepresst, wobei sie auch die Werkstückteile (7,8) zusammendrücken. Der Schweißstrom wird über die Elektroden (4,5) und die Werkzeugschalen (10,11) durch die Werkstückteile (7,8) geleitet. An den Kontaktstellen der Werkstückteile (7,8) entsteht durch den dortigen Übergangswiderstand eine Stromkonzentration, welche zu einer Plastifizierung oder zu einem Teigigwerden und zu einer Schweißverbindung an den Kontaktstellen führt. Anschließend kann der Werkstückhalter (9) nach der Stromabschaltung und dem Rückzug der Elektroden (4,5) wieder entnommen und nach dem Entladen des Fertigteils (6) erneut bestückt werden.

Die Bestückung des Werkstückhalters (9) kann manuell oder maschinell mittels einer Bestückungseinrichtung (25) erfolgen. Letztere kann an die Werkstückzuführung (24) angeschlossen sein. Die Handhabung des Werkstückhalters (9) kann ebenfalls manuell oder maschinell geschehen, wobei auch der Schließvorgang manuell durchgeführt werden kann. Anstatt der vorerwähnten mechanischen Schließeinrichtung (14) kann ein manuell betätigbarer Verschluss vorhanden sein, der die Werkzeugschalen (10,11) in Schließstellung zusammenhält und ggf. auch unter einem gewissen Spanndruck hält.

In der gezeigten und bevorzugten Ausführungsform ist eine maschinelle Handhabungseinrichtung (18) vorgesehen. Diese kann ein oder mehrere mehrachsige Manipulatoren (19,20,21,22) aufweisen, wobei vorzugsweise zwei oder mehr Manipulatoren (19,20,21,22) paarweise beidseits der Schweißmaschine (2) angeordnet sind. Die Manipulatoren (19,20,21,22) können beliebig ausgebildet sein und beliebig viele rotatorische und/oder translatorische Bewegungsachsen haben. In der gezeigten Ausführungsform sind sie als Industrieroboter, vorzugsweise als sechsachsige Gelenkarmroboter, ausgebildet. Die Manipulatoren (19,20,21,22) halten jeweils mit ihrer Manipulator- oder Roboterhand (23) einen Werkstückhalter (9) mittel eines elektrisch isolierten Anschlusses (17). Alternativ können an einer Roboterhand (23) auch mehrere Werkstückhalter (9) angeordnet sein.

In der gezeigten Ausführungsform von Figur 1 sind zwei Roboter (19,21) beidseits der Schweißmaschine (2) angeordnet, wobei jedem Roboter (19,21) jeweils eine Bestückungseinrichtung (22) und eine Fertigteilabfuhr (26) zugeordnet sind. Bei dieser Ausführung ist eine einzelne Werkstückzuführung (24) vorhanden.

In der Variante von Figur 2 sind beidseits der Schweißmaschine (2) jeweils zwei Roboter (19,20) und (21,22) angeordnet, wobei jedem dieser Roboterpaare eine eigene Werkstückzuführung (24) und eine eigene Bestückungseinrichtung (25) nebst einer Fertigteilabfuhr (26) zugeordnet ist. In beiden Ausführungsformen bedienen die Manipulatoren oder Roboter (19,20,21,22) abwechselnd die Schweißmaschine (2) und bringen einen bestückten Werkstückhalter (9) zwischen die Elektroden (4,5). Während des Schweißprozesses können die Werkstückhalter (9) dank des elektrisch isolierten Anschlusses (17) mit der Roboterhand (23) verbunden bleiben. Nach dem Schweißprozess werden die Werkstückhalter (9) entnommen, geöffnet und auf geeignete Weise auf die Fertigteilabfuhr (26) entladen. Je nach Art der Werkstücke (6) fallen diese von allein aus dem geöffneten Werkstückhalter (9). Alternativ können sie durch eine Entladevorrichtung, z.B. einen integrierten Ausstoßer (nicht dargestellt) ausgeworfen und an die Fertigteilabfuhr (26) übergeben werden.

In beiden gezeigten Ausführungsformen von Figur 1 und 2 sind die Be- und Entladezeiten der Werkstückhalter (9) von den eigentlichen Schweißzeiten entkoppelt. Wenn sich ein Werkstückhalter (9) in der Schweißmaschine (2) befindet, können in der gleichen Zeit ein oder mehrere andere Werkstückhalter (9) bestückt oder entladen werden. Die Auslegung der Handhabungseinrichtung (8) kann auch von der Kapazität der Schweißmaschine (2) und der Dauer des Schweißprozesses abhängen. Bei der Variante von Figur 1 kann die Schweißzeit ungefähr die gleiche Länge wie die Bestückungs- und Entladezeit einschließlich der Transport-und Bewegungszeiten der Roboter (19,21) sein. In der leistungsfähigeren Variante von Figur 2 ist die Schweißmaschine (2) schneller, so dass während der Bestückungs-Transport- und Entladezeit eines Werkstückhalters (9) drei Schweißprozesses an anderen Werkstückhaltern (9) durchgeführt werden können. Die vier Roboter (19,20,21,22) bedienen zyklisch abwechselnd die Schweißmaschine (2), wobei bei jedem Roboterpaar (19,20) und (21,22) die Bestückungs- und Entladezeiten überlappen können.

Wie Figur 4 bis 7 verdeutlichen, werden die Werkstückteile (7,8) in formschlüssige, verstellbare Werkstückaufnahmen (12) der Werkzeugschalen (10,11) gelegt. Die Werkstückaufnahmen (12) sind in ihrer Formgebung an die Außenform der zugehörigen Werkzeugteile (7,8) angepasst. Vorzugsweise besteht eine vollflächige Formanpassung. Die Einlegetiefe der Werkstückaufnahme (12) ist dabei kleiner als die zugeordnete Werkstückhöhe, so dass die Werkstücke ein wenig über die Oberfläche der in den Werkzeugschalen vorzugsweise bündig eingelassenen Werkstückaufnahmen (12) vorstehen. Durch diesen Überstand werden beim Zusammenpressen in der Schweißmaschine (2) die Werkzeugschalen (10,11) in Zustellrichtung gegenseitig distanziert und elektrisch isoliert. Der Schweißstrom fließt über die ebenfalls elektrisch leitenden Werkstückaufnahmen (12) und die Werkstückteile (7,8). Der Stromübergang findet dabei vorzugsweise nur an den Kontaktstellen der Werkstückteile (7,8) statt, wobei Nebenschlüsse vermieden werden.

Die Werkstückteile (7,8) können eine beliebige und bezüglich der Schweißstelle komplementäre Formgebung haben und z.B. als Massivteile oder Hohlteile ausgebildet sein. Insbesondere können die Werkstückteile (7,8) eine Schalenform besitzen, wobei die Schweißverbindung an den freien Schalenrändern erfolgt und ein Hohlteil, z.B. ein Rohr, eine Leitung, ein geschlossener Behälter oder dergleichen gebildet wird. Die Verschweißung findet an den Schalenrändern statt, wobei die Schalenränder eine gegenseitig angepasste Form haben. Stellenweise können zur Strombündelung an einem oder beiden Schalenrändern Vorsprünge vorhanden sein. Die Schweißstellen können je nach Formgebung der Schalenränder stellenweise oder umlaufend vorhanden sein können. Insbesondere lässt sich mit der beschriebenen Schweißtechnik eine umlaufende und dichte Schweißnaht zur Herstellung dichter Hohlkörper, insbesondere Behälter, schaffen.

Die Werkstückteile (7,8) können durch die Formanpassung in den Werkstückaufnahmen (12) per Reibschluss oder über eine Clipsverbindung gehalten werden. Alternativ oder zusätzlich können kleine Halter, z.B. bewegliche Haltenasen oder dergleichen in den Werkstückaufnahmen (12) integriert sein, welche die Werkstückteile (7,8) nach dem Einlegen formschlüssig festhalten.

Die Werkstückschalen (10,11) (10,11) sind in ihrer äußeren Formgebung an die Gestalt der Elektroden (4,5) angepasst, um für eine geeignete Kraft- und Stromübertragung zu sorgen. Die Werkzeugschalen (10,11) können nur im Bereich der Werkstückaufnahmen (12) elektrisch leitend oder ansonsten elektrisch isolierend ausgebildet sein. Eine elektrische Isolation kann alternativ oder zusätzlich auch zu den Halterungen oder Lagerstellen der relativ zueinander beweglichen Werkzeugschalen (10,11) bestehen. Auch der Anschluss (17) kann eine elektrische Isolierung aufweisen.

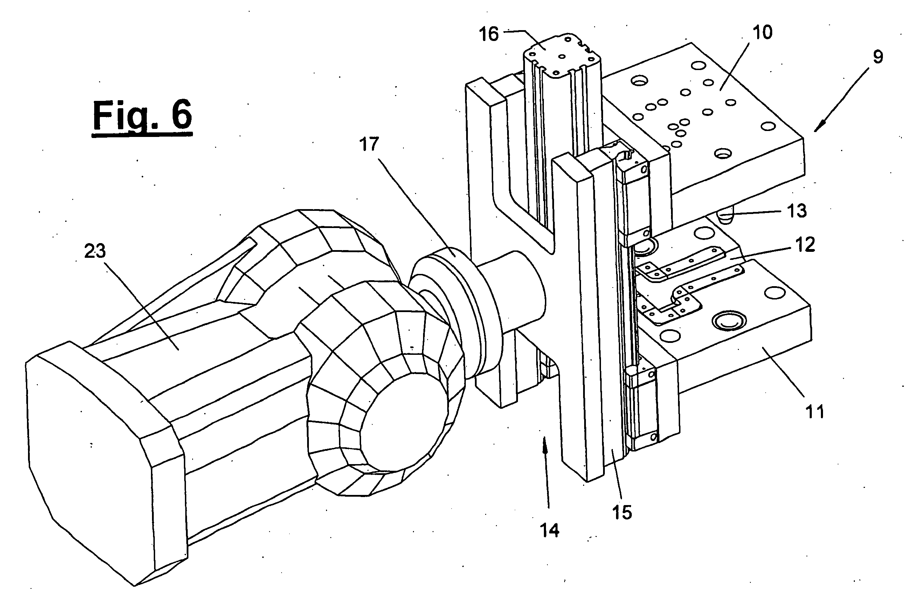

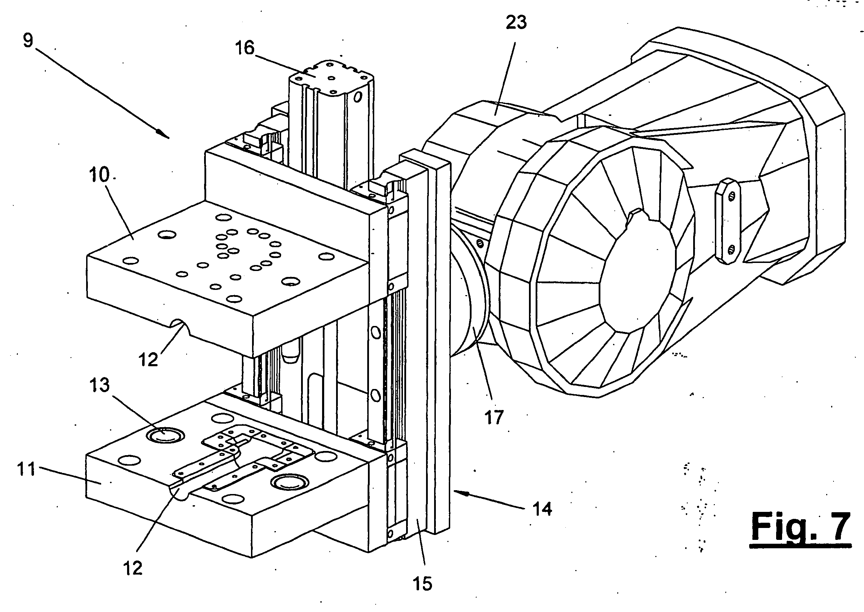

In Figur 6 und 7 ist die eingangs erwähnte Schließeinrichtung (14) dargestellt. Sie ist rückseitig über den besagten Anschluss (17) mit der Roboterhand (23) lösbar oder fest verbunden. Ggf. ist hier eine Wechselkupplung vorhanden, um die Werkstückhalter (9) bei Bedarf abgeben und austauschen zu können.

Die Schließeinrichtung (14) besitzt eine Führung (15) für die Werkzeugschalen (10,11), die z.B. in der gezeigten Weise als doppelte Führungsschienen in Schwalbenschwanz-Ausführung ausgebildet ist. In diesem Fall ist eine relative Linearbewegung der Werkzeugschalen (10,11) vorgesehen. Alternativ kann eine Schwenklagerung und entsprechende Führung vorhanden sein. Daneben sind auch weitere Varianten in der konstruktiven Ausführung und Kinematik der Führung (15) und der Lagerung möglich. Die Schließeinrichtung (14) weist ferner mindestens einen Antrieb (16) auf, mit dem die Werkzeugschalen (10,11) relativ zueinander entlang der Führung (15) bewegt werden können. Der Antrieb (16) kann in den Endlagen eine Sperrfunktion haben oder mit entsprechenden Zusatzeinrichtungen versehen sein, um die Werkzeugschalen (10,11) in der Öffnungs- und Schließstellung arretieren zu können. Zusätzlich zur Führung (15) können Werkzeugschalen (10,11) auch eine eigene Führung (13) in Form von Indices und Aufnahmebohrungen haben, mit denen die gegenseitige Werkzeugschalenposition in Schließstellung automatisch eingestellt und gehalten wird. Auf diese Weise ist auch die erforderliche gegenseitige Positionierung der Werkstückteile (7,8) mit der entsprechenden Präzision gegeben. Die zusätzliche Führung (13) ist elektrisch isoliert.

Die Schließeinrichtung (14) wird vom Manipulator (19,20,21,22) betätigt und ferngesteuert. Eine Fernsteuerung besteht auch für eine eventuelle in ein oder beide Werkzeugschalen (10,11) integrierte Ausstoßeinrichtung, mit der das Fertigteil (6) aus dem geöffneten Werkstückhalter (9) entladen wird. Die Schließeinrichtung (14) kann z.B. über die siebte Roboterachse angesteuert werden. Die Ausstoßeinrichtung kann über eine Folgesteuerung in der Schließeinrichtung (14) in der Abhängigkeit von der Werkzeugschalenbewegung gesteuert werden.

Abwandlungen der beschriebenen Ausführungsformen sind in verschiedener Weise möglich. Zum einen können mehrere Werkstückhalter (9) gemeinsam an einer Roboterhand (23) angeordnet sein. Wenn die Elektroden (4,5) entsprechend groß sind, können alle Werkstückhalter (9) gemeinsam in die Schweißmaschine (2) eingebracht und zusammengedrückt sowie mit Schweißstrom beaufschlagt werden. Anstelle der gezeigten Roboter können andere Arten von Manipulatoren Verwendung finden, die auch weniger Achsen aufweisen. Variabel ist ferner die Gestaltung der Werkzeugschalen (10,11) und der Werkstückaufnahmen (12), wobei letztere von der Art, Form, Zahl und Größe der zu verschweißenden Werkstückteile (7,8) abhängen und mit diesen variieren. Ein Werkstückhalter (9) kann außerdem mehr als zwei Werkzeugschalen (10,11) aufweisen, was z.B. zur Bildung von Mehrfach-Verschweißungen für größere Werkstücke vorteilhaft ist. Variabel ist ferner die konstruktive Ausgestaltung und Anordnung der Werkstückzuführung, Bestückungseinrichtung und Fertigteilabfuhr.

### BEZUGSZEICHENLISTE

- 1: Schweißanlage, Schweißzelle
- 2: Schweißmaschine
- 3: Gestell
- 4: Elektrode
- 5: Elektrode
- 6: Werkstück, Fertigteil
- 7: Werkstückteil, Halbzeug
- 8: Werkstückteil, Halbzeug
- 9: Werkstückhalter, Werkzeug
- 10: Werkzeugschale, Halbschale
- 11: Werkzeugschale, Halbschale
- 12: Werkstückaufnahme
- 13: Führung, Index
- 14: Schließeinrichtung
- 15: Führung Halbschalen
- 16: Antrieb
- 17: Anschluss
- 18: Handhabungseinrichtung
- 19: Manipulator, Roboter
- 20: Manipulator, Roboter
- 21: Manipulator, Roboter
- 22: Manipulator, Roboter
- 23: Roboterhand
- 24: Werkstückzuführung
- 25: Bestückungseinrichtung
- 26: Fertigteilabfuhr

## Patentansprüche

1. Verfahren zum elektrischen Pressschweißen von mehrteiligen Werkstücken (6) mittels mindestens einer mit zustellbaren Elektroden (4,5) bestückten Schweißmaschine (2), **dadurch gekennzeichnet, dass** die Werkstückteile (7,8) außerhalb der Schweißmaschine (2) in einen transportablen Werkstückhalter (9) mit mindestens zwei relativ zueinander beweglichen und elektrisch leitenden Werkzeugschalen (10,11) eingelegt und mit dem geschlossenen Werkstückhalter (9) in die Schweißmaschine (2) zwischen die Elektroden (4,5) eingeführt werden, wobei nach dem Schweißen der Werkstückhalter (9) wieder entnommen und entladen wird.

2. Verfahren nach Anspruch 1, **dadurch gekennzeichnet, dass** der Werkstückhalter (9) mit einer Bestückungseinrichtung (25) maschinell mit Werkstückteilen (7,8) bestückt wird.

3. Verfahren nach Anspruch 1 oder 2, **dadurch gekennzeichnet, dass** die Werkstückteile (7,8) in formschlüssige Werkstückaufnahmen (12) der Werkzeugschalen (10,11) gelegt werden.

4. Verfahren nach Anspruch 1, 2 oder 3, **dadurch gekennzeichnet, dass** der Werkstückhalter (9) mit einer Handhabungseinrichtung (18) maschinell gehandhabt und bewegt wird.

5. Verfahren nach einem der vorhergehenden Ansprüche, **dadurch gekennzeichnet, dass** der Werkstückhalter (9) mit der Handhabungseinrichtung (18) während des Schweißens verbunden bleibt.

6. Verfahren nach einem der vorhergehenden Ansprüche, **dadurch gekennzeichnet, dass** in der Schweißmaschine (2) ein elektrisches Impulsschweißen, insbesondere ein Kondensator-Entladungsschweißen, durchgeführt wird.

7. Verfahren nach einem der vorhergehenden Ansprüche, **dadurch gekennzeichnet, dass** schalenförmige Werkstückteile (7,8) mit ihren Schalenrändern aufeinander gelegt und zumindest bereichsweise verschweißt, insbesondere mit einer umlaufenden Schweißnaht dicht verschweißt werden.

8. Vorrichtung zum Zuführen von mehrteiligen Werkstücken (6) zu einer Schweißmaschine (2) mit mindestens einer zustellbaren Elektrode (4,5) zum elektrischen Pressschweißen, **dadurch gekennzeichnet, dass** die Vorrichtung mindestens einen transportablen und außerhalb der Schweißmaschine (2) bestückbaren Werkstückhalter (9) mit mindestens zwei relativ zueinander beweglichen und elektrisch leitenden Werkzeugschalen (10,11) zur Aufnahme und zum Schweißen der Werkstückteile (7,8) aufweist, wobei der geschlossene Werkstückhalter (9) mit den Werkstücken (6) in die Schweißmaschine (2) zwischen die Elektroden (4,5) einführbar und nach dem Schweißen wieder entnehmbar und entladbar ist.

9. Vorrichtung nach Anspruch 8, **dadurch gekennzeichnet, dass** die Werkzeugschalen (10,11) formschlüssige Werkstückaufnahmen (12) aufweisen.

10. Vorrichtung nach Anspruch 8 oder 9, **dadurch gekennzeichnet, dass** die Werkstückaufnahmen (12) eine Einlegetiefe aufweisen, die kleiner als die Werkstückhöhe ist.

11. Vorrichtung nach Anspruch 8, 9 oder 10, **dadurch gekennzeichnet, dass** der Werkstückhalter (9) einen manuell betätigbaren Verschluss oder eine steuerbare Schließeinrichtung (14) für die Werkzeugschalen (10,11) aufweist.

12. Vorrichtung nach Anspruch 11, **dadurch gekennzeichnet, dass** die Schließeinrichtung (14) eine Führung (15) und einen Stellantrieb (16) für die Werkzeugschalen (10,11) aufweist.

13. Vorrichtung nach einem der Ansprüche 8 bis 12, **dadurch gekennzeichnet, dass** die Werkzeugschalen (10,11) eine zusätzliche gegenseitige Führung (13) aufweisen.

14. Vorrichtung nach einem der Ansprüche 8 bis 13, **dadurch gekennzeichnet, dass** die Schweißmaschine (2) zwei oder mehr an die Außenform der Werkzeugschalen (10,11) angepasste Elektroden (4,5) aufweist.

15. vorrichtung nach einem der Ansprüche 8 bis 14, **dadurch gekennzeichnet, dass** die Schweißmaschine (2) als elektrische Impulsschweißmaschine, insbesondere als Kondensator-Entladungsschweißmaschine, ausgebildet ist.

16. Vorrichtung nach einem der Ansprüche 8 bis 15, **dadurch gekennzeichnet, dass** neben der Schweißmaschine (2) mindestens eine Bestückungseinrichtung (25) für mindestens einen Werkstückhalter (9) angeordnet ist.

17. Vorrichtung nach einem der Ansprüche 8 bis 16, **dadurch gekennzeichnet, dass** neben der Schweißmaschine (2) mindestens eine Werkstückzuführung (24) für die Werkstückteile (7, 8) und mindestens eine Fertigteilabfuhr (26) angeordnet sind.

18. Vorrichtung nach einem der Ansprüche 8 bis 17, **dadurch gekennzeichnet, dass** neben der Schweißmaschine (2) eine Handhabungseinrichtung (18) für ein oder mehrere Werkstückhalter (9) angeordnet ist.

19. Vorrichtung nach Anspruche 18, **dadurch gekennzeichnet, dass** der Werkstückhalter (9) einen elektrisch isolierten Anschluss (17) zur dauerhaften Verbindung mit der Handhabungseinrichtung (18) während des Schweißens aufweist.

20. Vorrichtung nach Anspruch 18 oder 19, **dadurch gekennzeichnet, dass** die Handhabungseinrichtung (18) ein oder mehrere mehrachsige Manipulatoren (19,20,21,22), vorzugsweise sechsachsige Gelenkarmroboter, aufweist, die paarweise beidseits einer Schweißmaschine (2) angeordnet sind.

## Claims

1. Method for the resistance pressure welding of multi-part workpieces (6) by means of at least one welding machine (2) equipped with adjustable electrodes (4, 5), **characterized in that** the workpiece parts (7, 8) are inserted, outside the welding machine (2), into a transportable workpiece holder (9) having at least two electrically conductive tool shells (10, 11) which can be moved in relation to each other, and are introduced with the closed workpiece holder (9) into the welding machine (2) between the electrodes (4, 5), wherein the workpiece holder (9) is removed and unloaded again after the welding process.

2. Method according to Claim 1, **characterized in that** the workpiece holder (9) is mechanically loaded with workpiece parts (7, 8) by means of a loading device (25).

3. Method according to Claim 1 or 2, **characterized in that** the workpiece parts (7, 8) are placed in interlocking workpiece receptacles (12) of the tool shells (10, 11).

4. Method according to Claim 1, 2 or 3, **characterized in that** the workpiece holder (9) is mechanically handled and moved by means of a handling device (18).

5. Method according to one of the preceding claims, **characterized in that** the workpiece holder (9) remains connected to the handling device (18) during the welding process.

6. Method according to one of the preceding claims, **characterized in that** resistance impulse welding, in particular capacitor discharge welding, is carried out in the welding machine (2).

7. Method according to one of the preceding claims, **characterized in that** shell edges of shell-like workpiece parts (7, 8) are placed onto one another and welded to one another at least in regions, in particular tightly welded with an encircling weld seam.

8. Device for feeding multi-part workpieces (6) to a welding machine (2) having at least one adjustable electrode (4, 5) for resistance pressure welding, **characterized in that** the device has at least one transportable workpiece holder (9), which can be loaded outside the welding machine (2) and has at least two electrically conductive tool shells (10, 11) which can be moved in relation to each other and are intended for receiving and for welding the workpiece parts (7, 8), wherein the closed workpiece holder (9) with the workpieces (6) can be introduced into the welding machine (2) between the electrodes (4, 5) and can be removed and unloaded again after the welding process.

9. Device according to Claim 8, **characterized in that** the tool shells (10, 11) have interlocking workpiece receptacles (12).

10. Device according to Claim 8 or 9, **characterized in that** the workpiece receptacles (12) have an insert depth which is less than the workpiece height.

11. Device according to Claim 8, 9 or 10, **characterized in that** the workpiece holder (9) has a manually actuable closure or a controllable closing device (14) for the tool shells (10, 11).

12. Device according to Claim 11, **characterized in that** the closing device (14) has a guide (15) and an actuating drive (16) for the tool shells (10, 11).

13. Device according to one of Claims 8 to 12, **characterized in that** the tool shells (10, 11) have an additional mutual guide (13).

14. Device according to one of Claims 8 to 13, **characterized in that** the welding machine (2) has two or more electrodes (4, 5) adapted to the external shape of the tool shells (10, 11).

15. Device according to one of Claims 8 to 14, **characterized in that** the welding machine (2) is embodied as a resistance impulse welding machine, in particular as a capacitor discharge welding machine.

16. Device according to one of Claims 8 to 15, **characterized in that** at least one loading device (25) for at least one workpiece holder (9) is arranged adjacent to the welding machine (2).

17. Device according to one of Claims 8 to 16, **characterized in that** at least one workpiece feed (24) for the workpiece parts (7, 8) and at least one finished-part discharge (26) are arranged adjacent to the welding machine (2).

18. Device according to one of Claims 8 to 17, **characterized in that** a handling device (18) for one or more workpiece holders (9) is arranged adjacent to the welding machine (2).

19. Device according to Claim 18, **characterized in that** the workpiece holder (9) has an electrically insulated connection (17) for permanent connection to the handling device (18) during the welding process.

20. Device according to Claim 18 or 19, **characterized in that** the handling device (18) has one or more multi-axial manipulators (19, 20, 21, 22), preferably six-axis articulated arm robots, which are arranged in pairs on both sides of a welding machine (2).

## Revendications

1. Procédé pour le soudage sous pression électrique de pièces en plusieurs parties (6) au moyen d'au moins une machine de soudage (2) munie d'électrodes (4, 5) pouvant être rapprochées, **caractérisé en ce que**
les parties de pièces (7, 8)sont introduites en dehors de la machine de soudage (2) dans un porte-pièce (9) transportable comprenant au moins deux coques d'outil (10, 11) mobiles l'une par rapport à l'autre et électriquement conductrices, et sont insérées avec le porte-pièce (9) fermé dans la machine de soudage (2) entre les électrodes (4, 5), le porte-pièce (9) étant à nouveau enlevé et déchargé après le soudage.

2. Procédé selon la revendication 1, **caractérisé en ce que**
le porte-pièce (9) est alimenté par machine avec les parties de pièces (7, 8) au moyen d'un dispositif d'alimentation (25).

3. Procédé selon la revendication 1 ou 2, **caractérisé en ce que** les parties de pièces (7, 8) sont placées dans des logements de pièces (12) des coques d'outil (10, 11).

4. Procédé selon la revendication 1, 2 ou 3, **caractérisé en ce que**
le porte-pièce (9) est manipulé et déplacé par machine au moyen d'un dispositif de manipulation (18).

5. Procédé selon l'une quelconque des revendications précédentes, **caractérisé en ce que**
le porte-pièces (9) reste connecté au dispositif de manipulation (18) pendant le soudage.

6. Procédé selon l'une quelconque des revendications précédentes, **caractérisé en ce**
**qu'**un soudage par impulsions électriques, en particulier un soudage par décharge de condensateur, est effectué dans la machine de soudage (2).

7. Procédé selon l'une quelconque des revendications précédentes, **caractérisé en ce que**
des parties de pièces (7, 8) en forme de coque sont placées l'une sur l'autre avec leurs bords de coques et sont au moins soudées en partie, notamment sont soudées hermétiquement avec un joint de soudure périphérique.

8. Dispositif pour acheminer des pièces en plusieurs parties (6) à une machine de soudage (2), comprenant au moins une électrode (4, 5) pouvant être rapprochée pour le soudage sous pression électrique, **caractérisé en ce que** le dispositif présente au moins un porte-pièce (9) transportable et pouvant être alimenté en dehors de la machine de soudage (2), avec au moins deux coques d'outil (10, 11) mobiles l'une par rapport à l'autre et électriquement conductrices, pour recevoir et souder les parties de pièces (7, 8), le porte-pièce (9) fermé pouvant être introduit avec les pièces (6) dans la machine de soudage (2) entre les électrodes (4, 5) et pouvant à nouveau être enlevé et déchargé après le soudage.

9. Dispositif selon la revendication 8, **caractérisé en ce que** les coques d'outil (10, 11) présentent des logements de pièces (12) avec engagement par coopération géométrique.

10. Dispositif selon la revendication 8 ou 9, **caractérisé en ce que** les logements de pièces (12) présentent une profondeur d'insertion qui est inférieure à la hauteur des pièces.

11. Dispositif selon la revendication 8, 9 ou 10, **caractérisé en ce que** le porte-pièces (9) présente une fermeture actionnable manuellement ou un dispositif de fermeture commandable (14) pour les coques d'outil (10, 11).

12. Dispositif selon la revendication 11, **caractérisé en ce que** le dispositif de fermeture (14) présente une glissière (15) et un entraînement de commande (16) pour les coques d'outil (10, 11).

13. Dispositif selon l'une quelconque des revendications 8 à 12, **caractérisé en ce que** les coques d'outil (10, 11) présentent une glissière supplémentaire opposée (13).

14. Dispositif selon l'une quelconque des revendications 8 à 13, **caractérisé en ce que** la machine de soudage (2) présente deux électrodes (4, 5) ou plus adaptées à la forme extérieure des coques d'outil (10, 11).

15. Dispositif selon l'une quelconque des revendications 8 à 14, **caractérisé en ce que** la machine de soudage (2) est réalisée sous forme de machine de soudage par impulsions électriques, en particulier sous forme de machine de soudage à décharge de condensateur.

16. Dispositif selon l'une quelconque des revendications 8 à 15, **caractérisé en ce qu'**au moins un dispositif d'alimentation (25) pour au moins un porte-pièces (9) est prévu à côté de la machine de soudage (2).

17. Dispositif selon l'une quelconque des revendications 8 à 16, **caractérisé en ce qu'**au moins une alimentation de pièces (24) pour les parties de pièces (7, 8) et au moins une évacuation des pièces finies (26) sont disposées à côté de la machine de soudage (2).

18. Dispositif selon l'une quelconque des revendications 8 à 17, **caractérisé en ce qu'**un dispositif de manipulation (18) pour un ou plusieurs porte-pièces (9) est disposé à côté de la machine de soudage (2).

19. Dispositif selon la revendication 18, **caractérisé en ce que** le porte-pièces (9) présente un raccord (17) électriquement isolé pour la connexion durable au dispositif de manipulation (18) pendant le soudage.

20. Dispositif selon la revendication 18 ou 19, **caractérisé en ce que** le dispositif de manipulation (18) présente un ou plusieurs manipulateurs multiaxes (19, 20, 21, 22), de préférence des robots à bras articulés à six axes, qui sont disposés par paire de part et d'autre d'une machine de soudage (2).
